# EUROPEAN PATENT APPLICATION

(11) **EP 2 081 307 A1**
(43) Date of publication of application: **22.07.2009**
(21) Application number: 09150422.5
(22) Date of filing: 13.01.2009
(51) Int. Cl.: H04B 10/155

(54) **Optical Transmitter, Optical Transmission System and Modulation Scheme Selection Method**

(30) Priority: 15.01.2008 JP 2008005930
(71) Applicant: NEC Corporation, Minato-ku Tokyo (JP)
(72) Inventor: Tajima, Tsutomu, Tokyo (JP)
(74) Representative: Betten & Resch

(57) **Abstract**

The present invention provides an optical transmitter, an optical transmission system and a modulation scheme selection method capable of selecting either of an optical duobinary modulation scheme and an optical DPSK modulation scheme. The optical transmitter according to the present invention includes a first exclusive OR circuit which outputs as a first output signal the exclusive OR of binary logic signals input from first and second input terminals, a delayer which delays the first output signal by a predetermined amount and outputs the delayed signal to the second input terminal, a low-pass filter which receives the first output signal as an input, converting the first output signal into a three-value signal and outputting the three-value signal as a second output signal, and a selector which selects one of the first output signal and the second output signal on the basis of a selection signal and outputs the selected signal.

## Description

This application is based upon and claims the benefit of priority from Japanese patent application No.2008-005930, filed on January 15, 2008, the disclosure of which is incorporated herein in its entirety by reference.

### BACKGROUND OF THE INVENTION

### Field of the Invention

The present invention relates to an optical transmitter used in an optical transmission system, to an optical transmission system and to a modulation scheme selection method.

### Description of Related Art

Optical transmitters used in optical transmission systems (apparatuses) exist. With such optical transmitters, optical differential phase shift keying (DPSK) modulation schemes (see, for example, Japanese Patent Laid Open Publication Nos. 2003-087201 and 2003-134181), optical duobinary modulation schemes (see, for example, Japanese Patent Laid Open Publication Nos. 2004-135345 and 2005-102221), etc., have been adopted as modulation schemes according to applications of the optical transmitters. Optical duobinary modulation schemes have an improved dispersion tolerance characteristic but have a slightly inferior receiving sensitivity characteristic. On the other hand, optical DPSK modulation schemes have an improved receiving sensitivity characteristic but have a slightly inferior dispersion tolerance characteristic. Therefore, optical duobinary modulation schemes are suitable for metro-area-oriented systems (of a comparatively short transmission distance) and optical DPSK modulation systems are suitable for long-distance systems such as a backbone.

### SUMMARY OF THE INVENTION

As described above, optical duobinary modulation schemes and optical DPSK modulation schemes exist as modulation schemes adopted for optical transmitters. However, those modulation schemes have advantages and disadvantages and it is therefore necessary for manufacturers and users of optical transmitters to make different optical transmitters compatible with the above-described modulation schemes and to selectively use the modulation schemes as needed.

Under these circumstances, it is markedly useful for a manufacturer or a user to enable selection from an optical duobinary modulation scheme and an optical DPSK modulation scheme in an optical transmitter according to each of applications of the modulation schemes, by arranging the optical transmitter so that the optical transmitter has the two modulation schemes.

In view of the above-described circumstances, an object of the present invention is to provide an optical transmitter, an optical transmission system and a modulation scheme selection method capable of enabling selection from two modulation schemes: an optical duobinary modulation scheme and an optical DPSK modulation scheme.

The present invention has the following features to achieve the above-described object.

### <Optical transmitter>

An optical transmitter according to the present invention includes a first exclusive OR circuit which outputs as a first output signal the exclusive OR of binary logic signals input from first and second input terminals, a delay unit that delays the first output signal by a predetermined amount and outputs the delayed signal to the second input terminal, a low-pass filter unit that receives the first output signal as an input, converts the first output signal into a three-value signal and outputs the three-value signal as a second output signal, and a selecting unit that selects one of the first output signal and the second output signal on the basis of a selection signal and the selected signal.

### <Optical transmission system>

An optical transmission system according to the present invention includes the optical transmitter according to the present invention, and an optical receiver which receives an optical signal output from the optical transmitter and demodulates the optical signal.

### <Modulation scheme selection method>

A modulation scheme selection method according to the present invention includes a first output signal output step of outputting as a first output signal the exclusive OR of binary logic signals input from first and second input terminals, a second output signal output step of delaying the first output signal by a predetermined amount, converting the first output signal into a three-value signal and outputting the three-value signal as a second output signal, and a selecting step of selecting one of the first output signal and the second output signal on the basis of a selection signal and outputting the selected signal.

### BRIEF DESCRIPTION OF THE DRAWING

The objects and features of the present invention will become more apparent from the consideration of the following detailed description taken in conjunction with the accompanying drawings, in which
Fig. 1 is a block diagram showing the configuration of an optical transmitter according to one exemplary embodiment of the present invention;
Fig. 2 is a table showing the logical operation of an EX-OR provided in the optical transmitter according to the one exemplary embodiment of the present invention;
Fig. 3 is a table showing the logical operation of the EX-OR provided in the optical transmitter according to the one exemplary embodiment of the present invention;
Fig. 4 is a flowchart showing the operation of the optical transmitter according to the one exemplary embodiment of the present invention;
Fig. 5 is a time chart of the optical transmitter according to the one exemplary embodiment of the present invention;
Fig. 6 is a block diagram showing the configuration of an optical transmission system according to the one exemplary embodiment of the present invention;
Fig. 7 is a time chart of the optical transmitter according to the one exemplary embodiment of the present invention;
Fig. 8 is a block diagram showing a minimal configuration in the optical transmitter according to the one exemplary embodiment of the present invention; and
Fig. 9 is a flowchart showing the minimal operations in the optical transmitter according to the one exemplary embodiment of the present invention.

### EXEMPLARY EMBODIMENT

The best mode for carrying out the present invention will be described in detail with reference to the accompanying drawings.

### (Optical transmitter)

An optical transmitter according to an exemplary embodiment of the present invention is an optical transmitter used in an optical transmission system (apparatus). The optical transmitter in the present embodiment has two modulation schemes: an optical duobinary modulation scheme and an optical DPSK modulation scheme. The optical transmitter in the present embodiment is characterized by being capable of easily selecting either of the two modulation schemes according to each of applications of the modulation schemes.

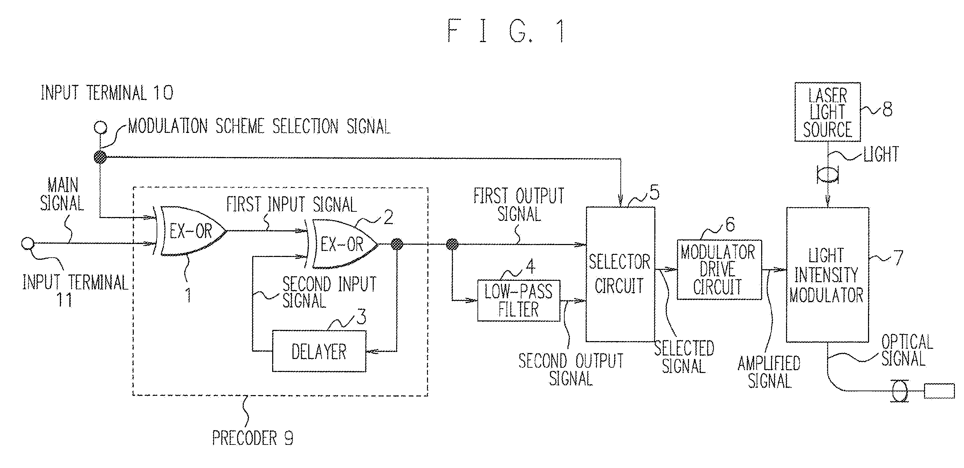

The configuration of the optical transmitter according to the embodiment of the present invention will first be described with reference to Fig. 1. Fig. 1 is a block diagram showing the configuration of the optical transmitter according to the embodiment of the present invention.

As shown in Fig. 1, the optical transmitter in the present embodiment includes input terminals 10 and 11, a precoder 9, a low-pass filter 4, a selector circuit 5, a modulator drive circuit 6, a light intensity modulator 7 and a leaser light source 8.

The input terminal 10 is a terminal through which a modulation scheme selection signal is input. The input terminal 11 is a terminal through which a main signal is input. The modulation scheme selection signal and the main signal are respectively generated in signal generation sections (not shown) and supplied to the input terminals 10 and 11.

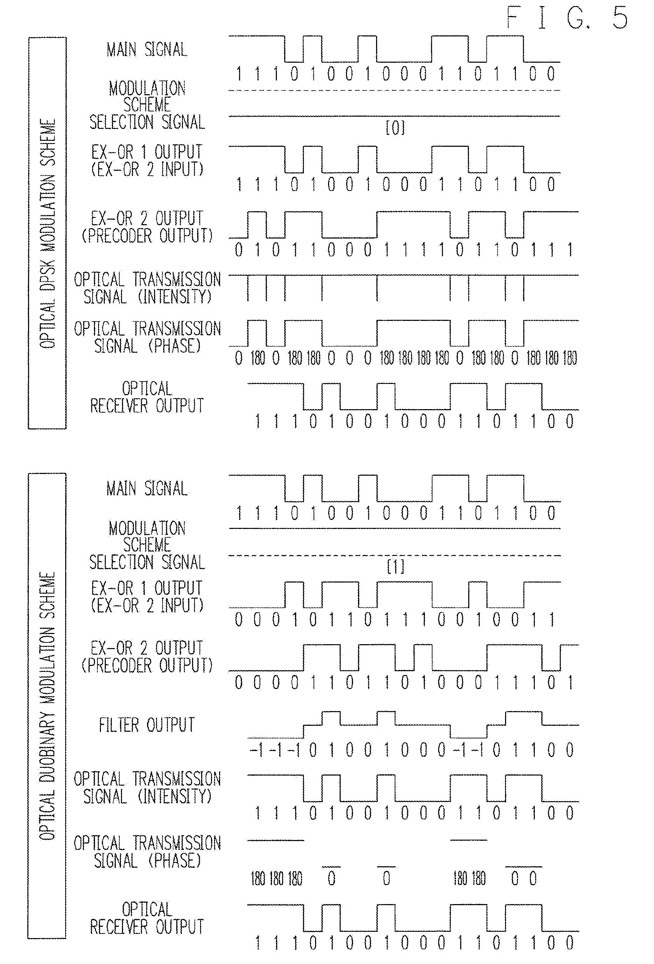

The modulation scheme selection signal is a digital control signal of logical "1" or "0" indicating the optical DPSK modulation scheme or the optical duobinary modulation scheme. In the present embodiment, as shown in Fig. 5, logical "1" indicates the optical duobinary modulation scheme, and logical "0" indicates the optical DPSK modulation scheme.

The main signal is a signal to be transmitted in the form of a digital signal (no return to zero (NRZ) signal) expressed by two values:
logical "1" or logical "0", as shown in Fig. 5.

The precoder 9 includes an exclusive-OR circuit (EX-OR) 1, an EX-OR 2, and a delayer 3. The precoder 9 generates, on the basis of the main signal and the modulation scheme selection signal, a digital signal (first output signal) for generating an optical signal in accordance with the optical DPSK modulation scheme.

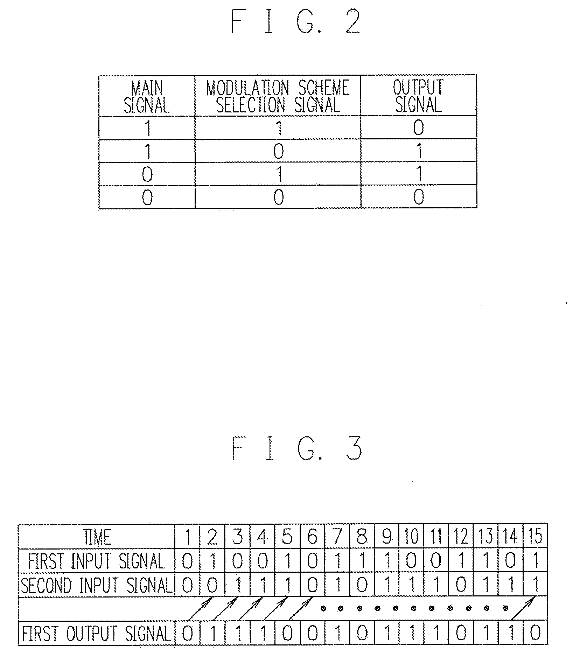

The EX-OR 1 is a circuit for performing a logical operation (exclusive OR). The modulation scheme selection signal input from the input terminal 10 is input to the EX-OR 1 via a fourth input terminal (not shown). The main signal input from the input terminal 11 is also input to the EX-OR 1 via a third input terminal (not shown). The EX-OR 1 performs the logical operation on the basis of the input modulation scheme selection signal and the main signal to output an output signal to the EX-OR 2. That is, as shown in Fig. 2, the EX-OR 1 outputs, as an output signal, the same signal as the input main signal when the input modulation scheme selection signal is logical "0" (when the signal indicates the optical DPSK modulation scheme). When the input modulation scheme selection signal is logical "1" (when the signal indicates the optical duobinary modulation scheme), the EX-OR 1 outputs, as an output signal, a signal of the logical inversion of the input main signal, as shown in Fig. 2. Examples of output signals thus output from the EX-OR 1 are respectively shown in "EX-OR 1 OUTPUT (EX-OR 2 INPUT)" in Fig. 5.

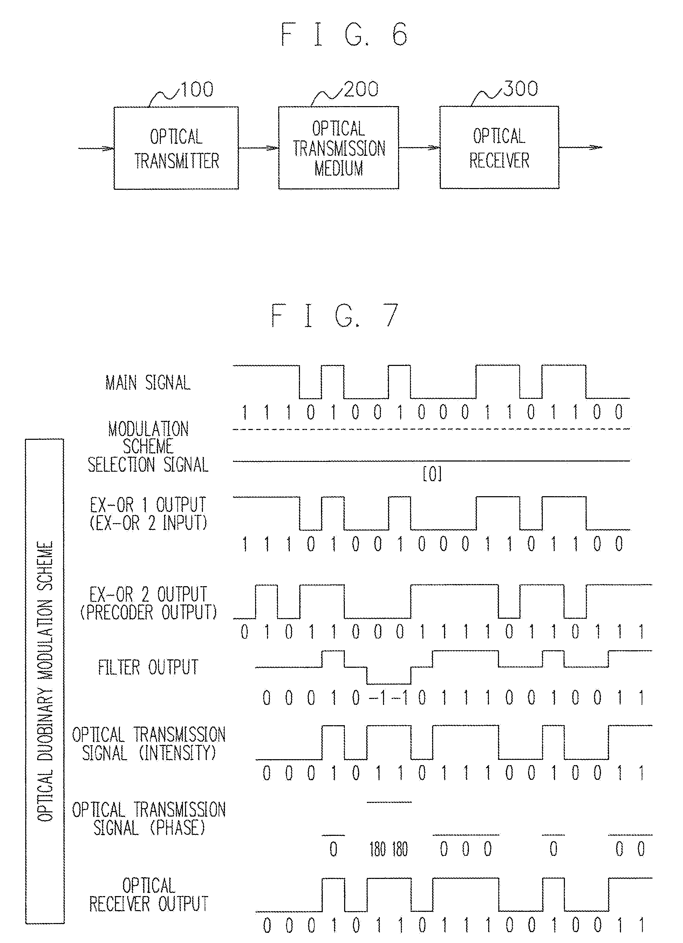

In optical transmission signal transmission using either of the optical DPSK modulation scheme and the optical duobinary modulation scheme, it is necessary that the final output from an optical receiver be identical to the main signal. In the present embodiment, therefore, the EX-OR 1 is provided to satisfy this condition. The reason that the EX-OR 1 is required will be concretely described below. Fig. 7 shows an example of a case where logical inversion of the main signal is not performed by the EX-OR 1. If logical inversion of the main signal is not performed by the EX-OR 1, the output signal from the EX-OR 1 is identical to the main signal, as shown in "EX-OR 1 OUTPUT" in Fig. 7. Through the EX-OR 2 and the low-pass filter 4, this output signal is obtained as an original signal from which the optical signal to be transmitted is generated. The generated optical signal to be transmitted is transmitted to the optical receiver. However, the main signal in the inverted form is output from the optical receiver, resulting failure to correctly perform transmission, as shown in "OPTICAL RECEIVER OUTPUT" in Fig. 7. In the present embodiment, therefore, the signal of the logical inversion of the main signal is output as an output signal from the EX-OR 1 when the modulation scheme selection signal indicates the optical duobinary modulation method. The signal identical to the main signal is then output from the optical receiver, as shown in "OPTICAL RECEIVER OUTPUT" in "OPTICAL DUOBINARY MODULATION SCHEME" in Fig. 5. In this way, transmission is correctly performed. Also, in the present embodiment, the main signal is directly output as an output signal when the modulation scheme selection signal indicates the optical DPSK modulation scheme. The signal identical to the main signal is then output from the optical receiver, as shown in "OPTICAL RECEIVER OUTPUT" in "OPTICAL DPSK MODULATION SCHEME" in Fig. 5. In this way, transmission is correctly performed.

The EX-OR 2 is a circuit for performing a logical operation (exclusive OR), as is the EX-OR 1. The EX-OR 2 includes a first input terminal and a second input terminal (each not shown). The output signal from the EX-OR 1 (the main signal or the signal of the logical inversion of the main signal) is input as a first input signal to the EX-OR 2 through the first input terminal (not shown). Also, a delayed signal (described below in detail) output from the delayer 3 is input as a second input signal to the EX-OR 2 through the second input terminal (not shown). The EX-OR 2 performs the logical operation on the basis of the first input signal and the second input signal input thereto and outputs an output signal (first output signal) representing the results of the logical operation. That is, the EX-OR 2 outputs, as shown in Fig. 3, a signal identical to the first input signal input thereto when the second input signal input thereto is logical "0", and outputs, as shown in Fig. 3, a signal of the logical inversion of the first input signal input thereto when the second input signal input thereto is logical "1". Examples of output signals (first output signal) thus output from the EX-OR 2 are respectively shown in "EX-OR 2 OUTPUT (PRECODER OUTPUT)" in Fig. 5. The output signal (first output signal) from the EX-OR 2 is split into two: an output signal to be output out of the precoder 9 and an output signal to be output to the delayer 3. The output signal to be output out of the precoder 9 is further split into two outside the precoder 9.

The first output signal from the EX-OR 2 is input to the delayer 3.
The delayer 3 delays the first output signal from the EX-OR 2 by a constant time to generate a delayed signal. The constant time referred to herein corresponds to one time slot of the main signal and one bit of the digital signal. For example, if the frequency of the main signal is 10 Gbps, the constant time is 100 psec. The delayer 3 outputs the generated delayed signal to the EX-OR 2. As described above, this delayed signal is input as the second input signal to the EX-OR 2 through the second input terminal (not shown). After being input, the second input signal again undergoes the logical operation with the next bit of the first input signal, as indicated by each arrow in Fig. 3.

The low-pass filter 4 is a filter having a band of about 1/3 of the bit rate of the first output signal from the precoder 9. One of the first output signals output from the EX-OR 2 and split into two outside the precoder 9 is input to the low-pass filter 4. The low-pass filter 4 converts the first output signal input thereto into a three-value signal (-1, 0, +1), reduces the band width of the signal to about 1/3 and outputs the signal to the selector circuit 5. This output signal is a digital signal (second output signal) for generating an optical signal in accordance with the optical duobinary modulation scheme. An example of the second output signal output from the low-pass filter 4 in this way is shown in "FILTER OUTPUT" in Fig. 5.

The modulation scheme selection signal input from the input terminal 10 is input to the selector circuit 5. Both the two output signals into which the output signal from the EX-OR 2 is split outside the precoder 9 are also input to the selector circuit 5. That is, one of these two signals is the first output signal directly input to the selector circuit 5 after two-splitting outside the precoder 9 and, the other is the second output signal input to the selector circuit 5 via the low-pass filter 4 after two-splitting outside the precoder 9. The selector circuit 5 selects one of the first output signal and the second output signal according to the input modulation scheme selection signal. That is, when the input modulation scheme selection signal is logical "0", the selector circuit 5 selects the first output signal directly input. When the input modulation scheme selection signal is logical "1", the selector circuit 5 selects the second output signal input via the low-pass filter 4. The selector circuit 5 outputs the selected signal to the modulator drive circuit 6.

To the modulator drive circuit 6, the signal selected by the selector circuit 5 is input. The modulator drive circuit 6 amplifies the input signal to an amplitude necessary for driving the light intensity modulator 7. The modulator drive circuit 6 outputs the amplified signal to the light intensity modulator 7.

The light intensity modulator 7 is a lithium niobate (LN) modulator using an optical material called lithium niobate. The light intensity modulator 7 can be used for phase modulation as well as for intensity modulation. The light intensity modulator 7 includes a light input port and a light output port (each not shown). Light of a predetermined wavelength is directly input from the laser light source 8 to the light intensity modulator 7 via an optical fiber and the light input port. The signal amplified and output by the modulator drive circuit 6 is also input to the light intensity modulator 7. The light intensity modulator 7 generates an optical signal on the basis of the input signal and light and outputs the optical signal through the light output port. Examples of optical signals thus output from the light intensity modulator 7 are respectively shown in "OPTICAL TRANSMISSION SIGNAL (INTENSITY)" and "OPTICAL TRANSMISSION SIGNAL (PHASE)" in Fig. 5.

The laser light source 8 outputs light of the predetermined wavelength to the light intensity modulator 7.

### (Modulation scheme selection method)

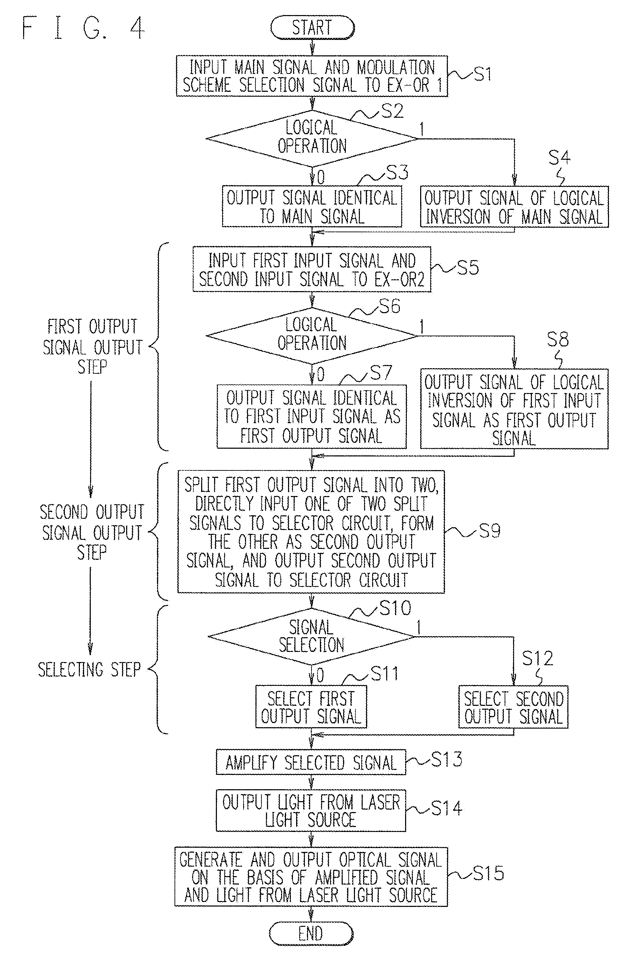

The operation of the optical transmitter according to one exemplary embodiment of the present invention (the modulation scheme selection method according to one exemplary embodiment of the present invention) will be described with reference to Fig. 4. Fig, 4 is a flowchart showing the operation of the optical transmitter according to one exemplary embodiment of the present invention.

To the EX-OR 1, the modulation scheme selection signal input from the input terminal 10 is input and the main signal (binary logic signal) input from the input terminal 11 is also input (step S1).

The EX-OR 1 performs the logical operation on the basis of the input main signal and modulation scheme selection signal (step S2). If the input modulation scheme selection signal is logical "0" (step S2/0), the EX-OR 1 outputs the signal identical to the input main signal to the EX-OR 2 (step S3). If the input modulation scheme selection signal is logical "1" (step S2/1), the EX-OR 1 outputs the signal of the logical inversion of the input main signal to the EX-OR 2 (step S4).

To the EX-OR 2, the output signal from the EX-OR 1 (the main signal or the signal of the logical inversion of the main signal) is input as the first input signal. The delayed signal output from the delayer 3 (the signal obtained by delaying the first output signal from the EX-OR 2 by the constant time) is also input as the second input signal to the EX-OR 2 (step S5).

The EX-OR 2 performs the logical operation on the basis of the first and second input signals into thereto (step S6). If the second input signal input to the EX-OR 2 is logical "0" (step S6/0), the EX-OR 2 outputs the signal identical to the first input signal (step S7). If the second input signal input to the EX-OR 2 is logical "1" (step S6/1), the EX-OR 2 outputs the signal of the logical inversion of the first input signal (step S8). The signal output from the EX-OR 2 is split into the output signal to be output out of the precoder 9 and the output signal to be output to the delayer 3.

The output signal to be output from the EX-OR 2 out of the precoder 9 (the first output signal) is further split into two outside the precoder 9. One of the two signals into which the first output signal is split is directly input to the selector circuit 5. The other of the two signals is input to the low-pass filter 4 to be formed into the second output signal and input to the selector circuit 5 (step S9).

The modulation scheme selection signal input from the input terminal 10 is input to the selector circuit 5. The selector circuit 5 selects one of the first output signal and the second output signal on the basis of the input modulation scheme selection signal (step 810). That is, if the input modulation scheme selection signal is logical "0" (step S10/0), the selector circuit 5 selects the first output signal (step S11). If the input modulation scheme selection signal is logical "1" (step S10/1), the selector circuit 5 selects the second output signal (step S12). The selector circuit 5 outputs the selected signal to the modulator drive circuit 6.

To the modulator drive circuit 6, the selected signal output from the selector circuit 5 is input. The modulator drive circuit 6 amplifies the selected signal to the amplitude necessary for driving the light intensity modulator 7. The modulator drive circuit 6 outputs the amplified signal to the light intensity modulator 7 (step S13).

To the light intensity modulator 7, the amplified signal is input from the modulator drive circuit 6. Also, light output from the laser light source 8 is directly input to the light input port (not shown) of the light intensity modulator 7 through the optical fiber (step S14). The light intensity modulator 7 is driven with the amplified signal. The driven light intensity modulator 7 generates an optical signal on the basis of the amplified signal and the light output from the laser light source 8 (step S15). The light intensity modulator 7 outputs the generated optical signal from the light output port (not shown).

The arrangement may be such that the processing operations shown in Fig. 4 are executed not only time-sequentially but also parallel or individually executed according to the processing ability of the apparatus that executes the processing or according to one's need.

Fig. 5 is a time chart of the optical transmitter according to one exemplary embodiment of the present invention.

It can be understood that in the optical transmitter according to one exemplary embodiment of the present invention, a precede made compatible with the optical DPSK modulation scheme and the optical duobinary modulation scheme by means of the modulation scheme selection signal, as shown in Fig. 5, can be configured. It can be confirmed that in either case the main signal is demodulated in the output of the optical receiver (optical receiver 300 shown in Fig. 6).

As described above, the optical transmitter and the modulation scheme selection method in the present embodiment are capable of easily selecting either of the optical DPSK modulation scheme and the optical duobinary modulation scheme. With the optical transmitter and the modulation scheme selection method in the present embodiment, therefore, a manufacturer who manufactures the optical transmitter can cover different two applications with one product. Also, a user of the optical transmitter can have one product for two different applications to improve the efficiency of provision and use of maintenance parts for example.

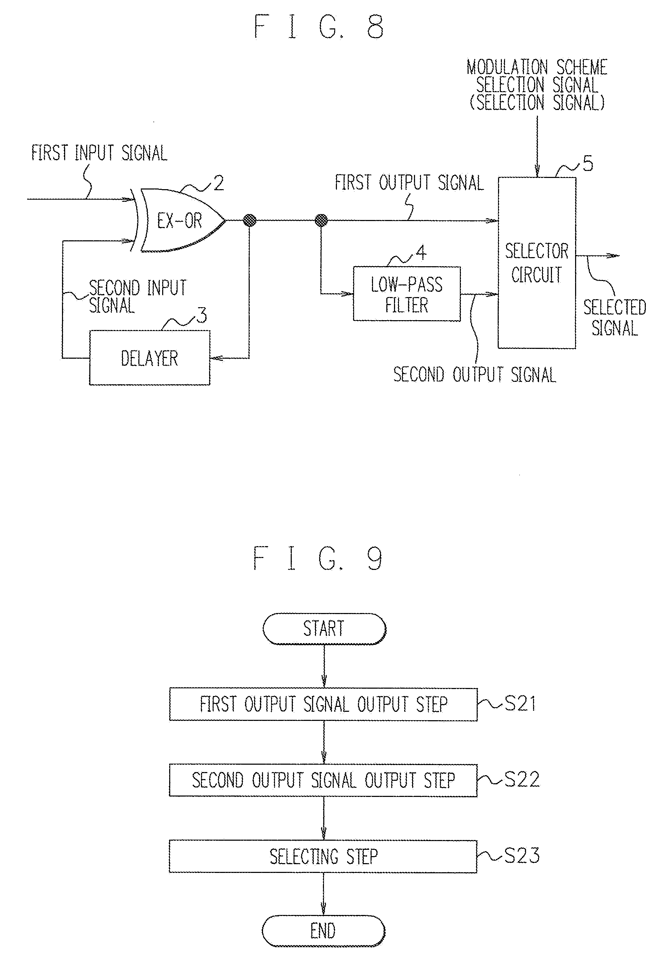

While optical transmitter in the present embodiment has been described in detail with reference to Fig. 1, a minimal configuration shown in Fig. 8 may suffice. That is, the optical transmitter in the present embodiment may include, as shown in Fig. 8, only an EX-OR 2 (first exclusive OR circuit), a delayer 3 (delay means), a low-pass filter 4 (low-pass filter means) and a selector circuit 5 (selecting means). The means shown in Fig. 8 are the same as those indicated by the same reference numerals in Fig. 1, and the description for them is not repeated here. The minimal configuration shown in Fig. 8 enables easy selection of either of the optical duobinary modulation scheme and the optical DPSK modulation scheme.

While the modulation scheme selection method according to the present embodiment has been described in detail with reference to Fig. 4, the minimal configuration shown in Fig. 9 may suffice. That is, the modulation scheme selection method in the present embodiment may include, as shown in Fig. 9, only a first output signal output step (step S21), a second output signal output step (step S22) and a selecting step (step S23). The first output signal output step is the same as steps S5 to S8 in Fig. 4, the second output signal output step is the same as step S9 in Fig. 4, and the selecting step is the same as steps S10 to S12 in Fig. 4. Therefore the description for these steps is not repeated here. The minimal operations shown in Fig. 9 enable easy selection of either of the optical duobinary modulation scheme and the optical DPSK modulation scheme.

### (Optical transmission system)

An optical transmission system using the above-described optical transmitter in the present embodiment will next be described. Fig. 6 is a diagram showing an exemplary embodiment of the optical transmission system according to the present embodiment. The optical transmission system in the present embodiment is assumed to be an optical transmission system of an extremely large transmission capacity exceeding 10 Gbps for example. However, the present invention is not limited to such an optical transmission system. Other optical transmission systems are also conceivable.

The optical transmission system in the present embodiment includes, as shown in Fig. 6, an optical transmitter 100, an optical transmission medium 200 and an optical receiver 300. The optical transmitter 100 is the above-described optical transmitter in the present embodiment, and the description for it is not repeated here.

An optical signal output from the optical transmitter 100 is output to the optical transmission medium 200. The optical transmission medium 200 is an optical transmission line configured only by an optical fiber transmission line or an optical transmission line using direct amplification and relay via an optical fiber transmission line.

An optical signal output from the optical transmission medium 200 is output to the optical receiver 300. The optical receiver 300 preamplifies the input optical signal and makes compensation for a waveform distortion due to dispersion in the optical transmission medium 200 (wavelength dispersion and polarization dispersion) as required. The optical receiver 300 converts the waveform-distortion-compensated optical signal into a baseband electric signal, reshapes the signal if necessary, and performs timing extraction and discriminating reproduction. The main signal is thereby demodulated as shown in "OPTICAL RECEIVER OUTPUT" in Fig. 5.

While the present invention has been described above with respect to the embodiments thereof, the above-described embodiments are preferred embodiments of the present invention, to which the scope of the present invention is not limited, and persons skilled in the art can construct forms including various changes in the above-described embodiments by making modifications and substitutions in the above-described embodiments without departing from the gist of the invention.

An example 1 is an optical transmitter comprising:
a first exclusive OR circuit which outputs as a first output signal the exclusive OR of binary logic signals input from first and second input terminals;
delay means for delaying the first output signal by a predetermined amount and outputting the delayed signal to the second input terminal;
low-pass filter means for receiving the first output signal as an input, converting the first output signal into a three-value signal and outputting the three-value signal as a second output signal; and
selecting means for selecting one of the first output signal and the second output signal on the basis of a selection signal and outputting the selected signal.

An example 2 is the optical transmitter according to the example 1, wherein the selection signal is maintained at a predetermined logic level corresponding to the result of selection by the selecting means, the optical transmitter further comprising a second exclusive OR circuit which outputs to the first input terminal the exclusive OR of the selection signal and a binary logic signal input from a third input terminal.

An example 3 is the optical transmitter according to the example 1 or 2, further comprising:
light source means for outputting light of a predetermined wavelength; and
modulation means for generating an optical signal on the basis of the signal selected by the selecting means and the light output from the light source means, and outputting the generated optical signal.

An example 4 is the optical transmitter according to any one of the examples 1 to 3, further comprising amplification means for amplifying the signal selected by the selecting means to a predetermined amplitude, wherein the signal amplified by the amplification means is input to the modulation means.

An example 5 is an optical transmission system comprising
the optical transmitter according to any one of the examples 1 to 4; and
an optical receiver which receives an optical signal output from the optical transmitter and demodulates the optical signal.

An example 6 is a modulation scheme selection method comprising
a first output signal output step of outputting as a first output signal the exclusive OR of binary logic signals input from first and second input terminals;
a second output signal output step of delaying the first output signal by a predetermined amount, thereafter converting the first output signal into a three-value signal and outputting the three-value signal as a second output signal; and
a selecting step of selecting one of the first output signal and the second output signal on the basis of a selection signal and outputting the selected signal.

An example 7 is the modulation scheme selection method according to the example 6, wherein the selection signal is maintained at a predetermined logic level corresponding to the result of selection in the selecting step, the method further comprising a second exclusive OR step of outputting to the first input terminal the exclusive OR of the selection signal and a binary logic signal input from a third input terminal.

An example 8 is the modulation scheme selection method according to the example 6 or 7, further comprising:
a light output step of outputting light of a predetermined wavelength from a light source; and
an optical signal generation step of generating an optical signal on the basis of the signal selected in the selecting step and the light output in the light output step, and outputting the generated optical signal.

An example 9 is the modulation scheme selection method according to any one of the examples 6 to 8, further comprising an amplification step of amplifying the signal selected in the selecting step to a predetermined amplitude.

An embodiment of the present invention is summarised as follows.

The present invention provides an optical transmitter, an optical transmission system and a modulation scheme selection method capable of selecting either of an optical duobinary modulation scheme and an optical DPSK modulation scheme. The optical transmitter according to the present invention includes a first exclusive OR circuit which outputs as a first output signal the exclusive OR of binary logic signals input from first and second input terminals, a delayer which delays the first output signal by a predetermined amount and outputs the delayed signal to the second input terminal, a low-pass filter which receives the first output signal as an input, converting the first output signal into a three-value signal and outputting the three-value signal as a second output signal, and a selector which selects one of the first output signal and the second output signal on the basis of a selection signal and outputs the selected signal.

## Claims

1. An optical transmitter comprising:
a first exclusive OR circuit which outputs as a first output signal the exclusive OR of binary logic signals input from first and second input terminals;
delay means for delaying the first output signal by a predetermined amount and outputting the delayed signal to the second input terminal
low-pass filter means for receiving the first output signal as an input, converting the first output signal into a three-value signal and outputting the three-value signal as a second output signal; and
selecting means for selecting one of the first output signal and the second output signal on the basis of a selection signal and outputting the selected signal.

2. The optical transmitter according to claim 1, wherein the selection signal is maintained at a predetermined logic level corresponding to the result of selection by the selecting means, the optical transmitter further comprising a second exclusive OR circuit which outputs to the first input terminal the exclusive OR of the selection signal and a binary logic signal input from a third input terminal.

3. The optical transmitter according to claim 1 or 2, further comprising:
light source means for outputting light of a predetermined wavelength; and
modulation means for generating an optical signal on the basis of the signal selected by the selecting means and the light output from the light source means, and outputting the generated optical signal.

4. The optical transmitter according to any one of claims 1 to 3, further comprising amplification means for amplifying the signal selected by the selecting means to a predetermined amplitude, wherein the signal amplified by the amplification means is input to the modulation means.

5. An optical transmission system comprising:
the optical transmitter according to any one of claims 1 to 4; and
an optical receiver which receives an optical signal output from the optical transmitter and demodulates the optical signal.

6. A modulation scheme selection method comprising:
a first output signal output step of outputting as a first output signal the exclusive OR of binary logic signals input from first and second input terminals;
a second output signal output step of delaying the first output signal by a predetermined amount, thereafter converting the first output signal into a three-value signal and outputting the three-value signal as a second output signal; and
a selecting step of selecting one of the first output signal and the second output signal on the basis of a selection signal and outputting the selected signal.

7. The modulation scheme selection method according to claim 6, wherein the selection signal is maintained at a predetermined logic level corresponding to the result of selection in the selecting step, the method further comprising a second exclusive OR step of outputting to the first input terminal the exclusive OR of the selection signal and a binary logic signal input from a third input terminal.

8. The modulation scheme selection method according to claim 6 or 7, further comprising:
a light output step of outputting light of a predetermined wavelength from a light source; and
an optical signal generation step of generating an optical signal on the basis of the signal selected in the selecting step and the light output in the light output step, and outputting the generated optical signal.

9. The modulation scheme selection method according to any one of claims 6 to 8, further comprising an amplification step of amplifying the signal selected in the selecting step to a predetermined amplitude.
